Europäisches Patentamt

European Patent Office

Office européen des brevets

(11) Numéro de publication: **0 263 767**
**A1**

## (12) DEMANDE DE BREVET EUROPEEN

(21) Numéro de dépôt: 87420271.6

(22) Date de dépôt: 06.10.87

(51) Int. Cl.⁴: **B 26 F 3/08**
B 29 C 67/22

(30) Priorité: 09.10.86 FR 8614209

(43) Date de publication de la demande:
13.04.88 Bulletin 88/15

(84) Etats contractants désignés: **BE DE ES GB IT**

(71) Demandeur: **DELTA-FOAM**
**131, rue de Créqui**
**F-69006 Lyon (FR)**

(72) Inventeur: **Lebrun, Jean-Yves**
**Route de Sainte Catherine**
**St Martin La Plaine F-42800 Rive De Gier (FR)**

(74) Mandataire: **Laurent, Michel et al**
**Cabinet LAURENT et GUERRE B.P. 32**
**F-69131 Ecully Cedex (FR)**

(54) Installation permettant de réaliser des évidements à l'intérieur de blocs de matières synthétiques alvéolaires pour l'obtention d'emballages, boîtiers isolants ou articles similaires.

(57) Installation permettant de réaliser des évidements à l'intérieur de matières plastiques cellulaires afin de réaliser notamment des boitiers ou emballages isolants du type comportant au moins un outil (1), monté sur un arbre (2), susceptible d'être entraîné en rotation de manière à faire pénétrer ledit outil à l'intérieur du bloc de matière.

Selon l'invention, l'outil chaffant (1) est constitué par un tube dont le profil correspond à celui de l'évidement à réaliser à l'intérieur du bloc de matière, le chauffage dudit tube étant obtenu par circulation d'un fluide caloporteur.

EP 0 263 767 A1

**Description**

INSTALLATION PERMETTANT DE REALISER DES EVIDEMENTS A L'INTERIEUR DE BLOCS DE MATIERES SYNTHETIQUES ALVEOLAIRES POUR L'OBTENTION D'EMBALLAGES, BOITIERS ISOLANTS OU ARTICLES SIMILAIRES.

Diverses solutions ont été proposées à ce jour pour réaliser des boitiers isolants, emballages protecteurs.., à partir de matériaux synthétiques cellulaires et, plus particulièrement à partir de polystyrène.

La technique la plus couramment utilisée à ce jour est celle du moulage. Cette technique permet d'obtenir des boitiers qui s'adaptent parfaitement au contour des articles à protéger, mais elle n'est applicable que pour de grandes séries compte-tenu des investissements et des délais de fabrication des moules. Par ailleurs, toutes les matières plastiques cellulaires ne sont pas conformables par moulage.

Par suite, il a été proposé de réaliser l'évidement, dans lequel doit venir s'encastrer le produit, directement à l'intérieur d'un bloc, par exemple par sciage, par fraisage au moyen d'outils montés sur un ensemble de commande relié à un copieur. Outre ces techniques qui peuvent être désignées par l'expression "évidement mécanique", il a également été proposé de réaliser l'enlèvement de matières à l'intérieur du bloc au moyen d'une résistance électrique rigide, ayant la forme d'une génératrice de l'évidements à réaliser, cette résistance étant montée sur un axe rotatif qui permet de la faire pénétrer progressivement à l'intérieur du bloc de matière expansée et réalise donc une découpe dans ce bloc correspondant au profil de ladite résistance. Une telle technique est décrite notamment dans les brevets GB-A-1 594 912 et GB-A-1 382 251.

De nombreux problèmes se posent lors de la mise en oeuvre d'un tel procédé. En effet, les résistances doivent avoir une tenue mécanique suffisante pour ne pas se déformer lorsqu'on les fait pénétrer à l'intérieur de la matière plastique. Par ailleurs, ces résistances métalliques électriques sont en général chauffées par une source d'alimentation en 220/240 volts et il est très difficile d'obtenir une bonne régulation de la température sur toute la longueur de l'outil de découpe, cette température pouvant varier notamment en fonction de la profondeur d'enfoncement de l'outil dans la matière expansée qui, bien entendu, varie non seulement lors de la rotation dudit outil, mais également pour une position donnée, d'un point à l'autre de cet outil.

Enfin, dans les solutions antérieures, le bloc à évider étant fixe par rapport à l'outil, il n'est possible d'obtenir qu'un seul type d'évidement par outil.

Dans un autre domaine technique qui est celui de la découpe de blocs de glace pour obtenir des cubes de petites dimensions, il a été proposé dans l'US-A-2 239473 d'utiliser comme élément de découpe un ensemble en forme de grille constitué d'éléments tubulaires à l'intérieur duquel circule de l'eau chaude. Une telle solution qui permet de résoudre les problèmes de tenue mécanique et d'alimentation électrique ne peut cependant en aucun cas être extrapolée pour réaliser la découpe de matière plastique cellulaire, en vue de réaliser des évidements de forme complexe et variable étant donné que, d'une part, une circulation d'eau chaude à l'intérieur de tubes ne serait pas suffisante pour provoquer la découpe d'une telle matière et que, d'autre part et surtout, elle ne peut en aucun cas conduire à la réalisation d'évidements à l'intérieur d'un bloc mais simplement à la découpe d'un bloc de grandes dimensions en cubes de toutes autres dimensions.

Or on a trouvé, et c'est ce qui fait l'objet de la présente invention, une installation perfectionnée mettant en oeuvre ce procédé de découpe au moyen d'un outil conformé chauffant qui surmonte les inconvénients des solutions antérieures et permet, notamment, d'obtenir une très bonne régulation de la température sur toute la longueur de l'outil et ce, quelque soit sa forme ainsi que, dans une forme de réalisation préférentielle, d'obtenir à partir d'un même outil des évidements de forme variable. Par ailleurs, il a été constaté que l'installation selon l'invention permettait d'obtenir des surfaces d'évidement parfaitement lisses et beaucoup plus dures que le coeur même du bloc de matières isolantes.

D'une manière générale, l'invention concerne donc une installation permettant de réaliser des éléments à l'intérieur de matières plastiques cellulaires, afin de réaliser notamment des boitiers ou emballages isolants, cette installation étant du type comportant au moins un outil, monté sur un arbre, susceptible d'être entraîné en rotation de manière à faire pénétrer ledit outil à l'intérieur dudit bloc de matière et elle se caractérise par le fait que l'outil chauffant est constitué d'un tube dont le profil correspond à celui de l'évidement à réaliser à l'intérieur du bloc de matière, le chauffage dudit tube étant obtenu par circulation d'un fluide caloporteur

Avantageusement et en pratique :
- les outils sont montés sur un arbre susceptible de recevoir un mouvement de rotation de 180° en avant et en arrière par rapport à la table supportant le bloc de matière à évider ;
- la table support du bloc de matière à évider reçoit un déplacement synchronisé avec la rotation des outils ;
- l'arbre support des outils reçoit un déplacement de monte et baisse lors de la pénétration desdits outils à l'intérieur du bloc.

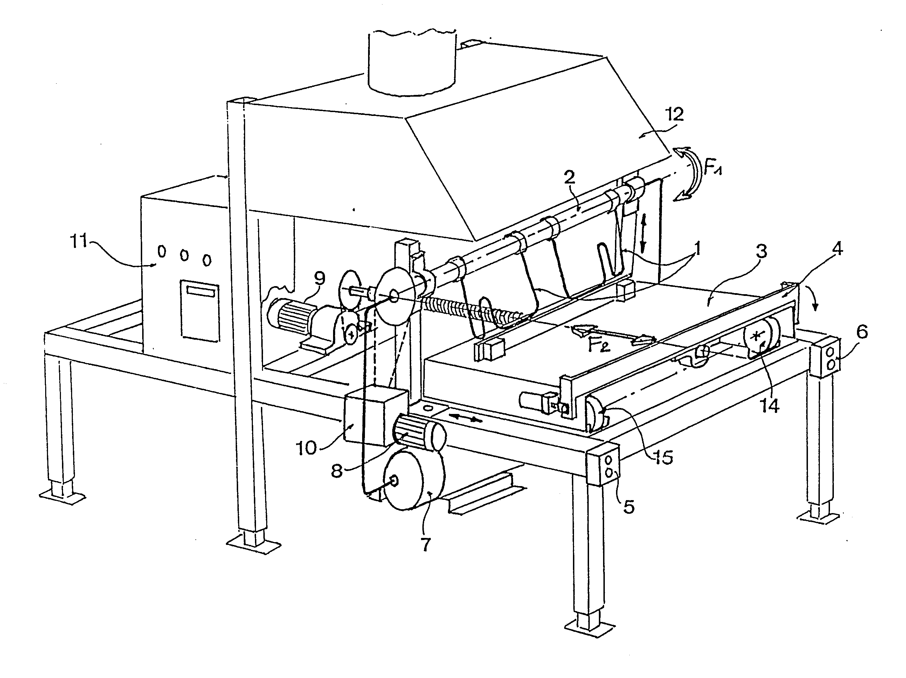

L'invention et les avantages qu'elle apporte seront cependant mieux compris grâce à l'exemple de réalisation donné ci-après à titre indicatif mais non limitatif et qui est illustré par la figure annexée qui est une vue en perspective, partiellement éclatée, d'une installation conforme à l'invention.

Si l'on se reporte à ce schéma, l'installation selon l'invention permettant de réaliser l'évidement de blocs de matières plastiques cellulaires par enlèvement de matières au moyen d'un outil de découpe (1) constitué par des éléments chauffants, dont le profil correspond à la forme de l'évidement à former, se compose essentiellement :

- d'une broche (2) sur laquelle sont montés les outils (1), cette broche (2) étant parallèle à une table (3) sur laquelle est monté le bloc à évider, ce bloc n'étant pas représenté par mesure de simplification ;
- des moyens (4), constitués par une règle déplaçable, permettant de bloquer la matière à évider sur la table (3) ;
- un boitier de commande (5) pour la broche (2) ;
- un boitier de commande (6) pour la table (3) ;
- une chaudière (7) et un échangeur de fluide caloporteur permettant, ainsi que cela sera vu plus en détail dans la suite de la description, d'assurer le chauffage des outils (1) ;
- un motovariateur de vitesse (8) assurant l'entraînement de la broche (2) ; le boitier de commande (5) est relié au motovariateur (8) et permet de faire tourner la broche (2) de 180° dans un sens et dans l'autre comme représenté par la flèche F1 ;
- un motovariateur (9) de vitesse assurant le déplacement de la table (3) en synchronisme avec les déplacements de l'arbre (2) ;
- un boitier de régulation et de contrôle (10) de la chaudière (7) et de la température des outils (1) ;
- un coffret (11) de commande et de puissance électrique de la machine ;
- une hotte (12) d'extraction des vapeurs.

Conformément à l'invention, dans une telle installation, les outils chauffants (1) ne sont pas constitués par des fils chauffés électriquement comme antérieurement mais par des tubes (voir figure) à l'intérieur desquels s'écoule un fluide caloporteur chauffé par la chaudière (7). Compte-tenu que l'arbre (2) doit communiquer aux outils chauffants (1) un déplacement angulaire, les tubes (1), qui en général ont un diamètre d'environ 0,5 mm et sont à base d'un métal bon conducteur de la chaleur sont montés sur l'arbre (2) au moyen de joints tournants conventionnels permettant d'assurer l'étanchéité et la circulation du fluide à l'intérieur des outils chauffants.

Si dans une telle installation, il peut être envisagé de ne pas faire déplacer le bloc de matière monté sur la table (3) par rapport aux outils (1), pour certaines applications, ladite table (3) peut recevoir par l'intermédiaire du motovariateur de vitesse (9) commandant une tige filetée (13) un déplacement d'avance et de recul, fonction des évidements à réaliser, comme indiqué par la flèche F2. Le déplacement de la table (3) par rapport à celui des outils (1) sera déterminé en fonction de la forme des évidements à réaliser. Ainsi, il sera possible, pour une forme déterminée, de faire avancer l'outil dans le même sens que le déplacement de la table et, ou en sens inverse voire même de combiner de tels déplacements avec, si nécessaire, des périodes pendant lesquelles la table est fixe.

Grâce à des tels déplacements conjugués entre l'outil (1) et l'avance de la table (3), il est donc possible à partir d'un même outil d'obtenir des éléments dont les profils sont les mêmes mais qui ont des dimensions différentes. Cela est particulièrement intéressant lorsque l'on réalise des boitiers pour des articles de même section mais de largeur différente.

Par rapport aux solutions antérieures, grâce à l'utilisation d'outils chauffants constitués de tubes à l'intérieur desquels circule un fluide caloporteur, on obtient non seulement une très bonne régulation de la température sur toute la longueur desdits outils et ce, quelle que soit le niveau de pénétration à l'intérieur du bloc d'une matière mais on a également constaté que l'état de la surface de l'évidement formé était parfaitement lisse et formait une croûte dure améliorant la résistance du boitier réalisé. De plus, comme dit précédemment, il est possible d'obtenir à partir d'un seul et même outil des évidements de formes différentes en jouant sur les vitesses de déplacement conjuguées entre l'outil et l'avance de la table portant le bloc à évider.

L'invention n'est pas limitée aux exemples de réalisation décrits précédemment mais elle en couvre toutes les variantes réalisées dans le même esprit. Ainsi, si dans le cas présent, la broche (2) comporte deux outils similaires (1) permettant de réaliser simultanément deux boitiers identiques, il pourrait être envisagé de ne monter sur cette broche qu'un seul outil au lieu de deux.

Par ailleurs, si dans le cas présent, la commande du déplacement du chariot (3) est obtenue par l'intermédiaire d'une système à vis et écrous, ledit chariot étant monté au moyen de roulettes (14) sur des glissières (15), d'autres systèmes de déplacement pourraient être utilisés. De même, pour assurer la synchronisation du mouvement de rotation de la broche support (2) et de translation du chariot (3), d'autres moyens que des capteurs de fin de course réglables pourraient être envisagés.

**Revendications**

1/ Installation permettant de réaliser des évidements à l'intérieur de matières plastiques cellulaires afin de réaliser notamment des boitiers ou emballages isolants du type comportant au moins un outil (1), monté sur un arbre (2), susceptible d'être entraîné en rotation de manière à faire pénétrer ledit outil à l'intérieur du bloc de matière, caractérisée par le fait que ledit outil chauffant (1) est consitituté d'un tube dont le profil correspond à celui de l'évidement à réaliser à l'intérieur du bloc de matière, le chauffage dudit tube étant obtenu par circulation d'un fluide caloporteur.

2/ Installation selon la revendication 1, caractérisée par le fait que les outils (1) sont montés sur un arbre (2) susceptible de recevoir un mouvement de rotation de 180° en avant et en arrière par rapport à la table (3) supportant le bloc de matière à évider.

3/ Installation selon l'une des revendications 1 et 2, caractérisée par le fait que la table support (3) du bloc de matière à évider reçoit un déplacement synchronisé avec la rotation des outils (1).

4/ Installation selon l'une des revendications 1 à 3, caractérisée par le fait que l'arbre support des outils (1) reçoit un déplacement de monte et baisse lors de la pénétration desdits outils à l'intérieur du bloc.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 382 251  (SWEET)<br>* Page 1, lignes 39-71; figures 2,4 *<br>--- | 1-4 | B 26 F    3/08<br>B 29 C   67/22 |
| Y | US-A-2 239 473  (ULINE)<br>* Page 1, colonne de gauche, lignes 1-10; figures 2,9 *<br>--- | 1-4 | |
| A | US-A-3 443 007  (HARDY)<br>* Colonne 1, lignes 16-22,29-48; colonne 2, lignes 31-48; colonne 5, ligne 69 - colonne 6, lignes 1,11-21; figures 1,2 *<br>--- | 1 | |
| A | FR-A-1 455 406  (CSF)<br>--- | | |
| A | US-A-2 420 400  (PFEIL)<br>--- | | |
| A | US-A-2 997 905  (LARSON)<br>----- | | |

**DOMAINES TECHNIQUES RECHERCHES (Int. Cl.4)**

B 26 F
B 29 C

Le présent rapport a été établi pour toutes les revendications

| Lieu de la recherche | Date d'achèvement de la recherche | Examinateur |
|---|---|---|
| LA HAYE | 08-12-1987 | HUGGINS J.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\& : membre de la même famille, document correspondant

EPO FORM 1503 03.82 (P0402)